# FASCICULE DE BREVET EUROPEEN

(11) **EP 1 577 167 B1**
(45) Date de publication et mention de la délivrance du brevet: **27.11.2013**
(21) Numéro de dépôt: 05300159.0
(22) Date de dépôt: 02.03.2005
(51) Int. Cl.: B60R 19/18

(54) **Structure d'absorption de chocs et bouclier avant d'automobile la comprenant**
Stossabsorbierendes Bauteil und Vorderschild eines Kraftfahrzeugs mit demselben
Shock-absorbing structure and front shield for an automobile incorporating the same

(30) Priorité: 17.03.2004 FR 0450530
(43) Date de publication de la demande: 21.09.2005
(73) Titulaire: Renault s.a.s., 92100 Boulogne Billancourt (FR)
(72) Inventeur: Petra, Jean Marc, 91140 Villeban sur Yvette (FR); Rouyer, François, 75013 Paris (FR)

(56) Documents cités:
- EP-A- 1 293 389
- WO-A-03/104030
- US-A- 3 512 822
- US-A- 3 744 835
- US-A- 3 926 462

## Description

L'invention dont il est question ici concerne une structure d'absorption de chocs destinée à une automobile, ainsi qu'un bouclier avant d'automobile comprenant cette structure.

Un objet principal en est d'absorber les chocs produits par le véhicule sur un piéton pendant un accident en les amortissant afin d'en réduire les conséquences. Un autre objet est d'améliorer l'agencement du bouclier avant de l'automobile pour disposer l'entrée d'air principale de refroidissement du moteur à une position où elle est plus efficace, et précisément à travers la structure d'absorption.

L'art connu, notamment via les documents EP 1 293 389 A1, EP 1 378 403 A1 et GB 623 498 A, comprend de nombreux genres de structures d'absorption de choc à l'avant d'un véhicule en fléchissant ou s'enfonçant de diverses manières. Aucun n'est cependant comparable à l'invention.

Sous une forme de l'invention, le bouclier avant d'automobile comporte une structure d'absorption de chocs comprenant une rangée transversale de barreaux verticaux et au moins deux éléments absorbeurs placés derrière chaque barreau à des hauteurs différentes, le bouclier comprenant une entrée principale d'air de refroidissement du moteur entre les deux hauteurs d'éléments absorbeurs et une grille à barreaux verticaux couvrant les barreaux de la structure d'absorption de chocs. La jambe d'un piéton heurté touche un des barreaux, qui enfonce les éléments absorbeurs placés derrière lui et qui absorbent donc l'énergie du choc. Comme un seul barreau est normalement touché par le piéton, une proportion correspondante des éléments absorbeurs est attaquée, dont la résistance d'ensemble est faible : un enfoncement localisé des éléments absorbeurs est donc garanti avec une absorption suffisante de l'énergie de choc, même si les éléments absorbeurs sont construits en bandes continues s'étendant chacune derrière tous les barreaux.

Le nombre des éléments absorbeurs placés derrière chaque barreau n'est pas fixé, mais il sera usuel d'en avoir deux ou trois, placés aux extrémités du barreau, ou aux extrémités et au milieu. La structure à claire-voie des barreaux et des éléments absorbeurs donne accès à l'intérieur de la carrosserie et peut favorablement servir d'entrée d'air principale du moteur ; on préconise en pratique de la couvrir d'une simple grille dont les barreaux s'étendront devant ceux de la structure absorbante afin d'assurer un aspect satisfaisant.

Selon d'autres caractéristiques de l'invention :
- les éléments absorbeurs sont des bandes allongées transversalement derrière chacun des barreaux,
- la structure d'absorption comprend un troisième élément absorbeur placé derrière chaque barreau,
- les barreaux sont continues avec les éléments absorbeurs.

L'invention sera maintenant décrite en liaison aux figures, afin de donner plus de détail sur l'invention, ses caractéristiques et avantages :
- la figure 1 est une vue d'un avant d'automobile,
- la figure 2 est une vue en coupe d'une partie de la figure 1,
- et la figure 3 est une coupe d'une conception dérivée de la précédente.

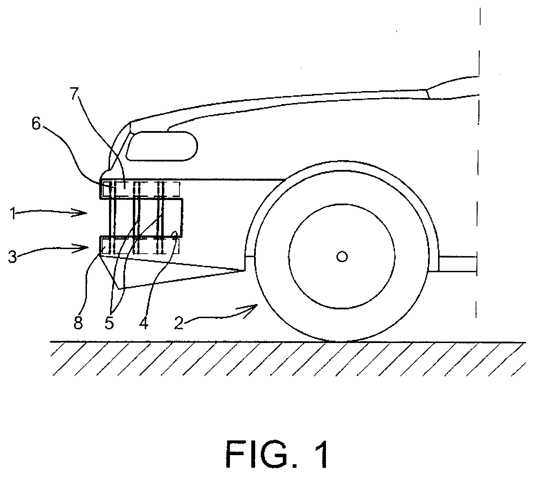

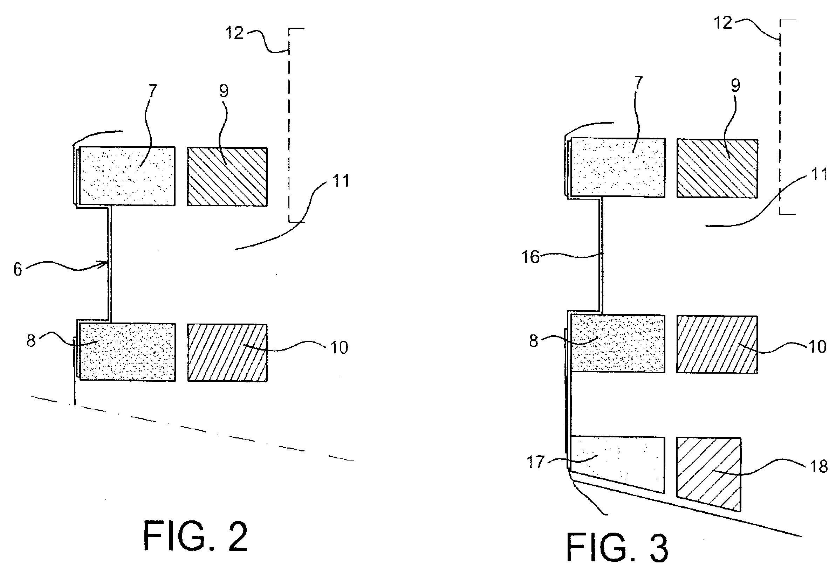

On se reporte à la figure 1. La carrosserie de l'automobile comprend une échancrure 1 orientée vers l'avant et s'étendant légèrement sur les côtés à hauteur de la moitié supérieure des roues 2. Une grille enjoliveuse 3 est disposée avec un cadre 4 sur le pourtour de l'échancrure 1 ; elle comprend encore des barreaux 5 verticaux et parallèles placés devant des barreaux d'absorption de choc 6 mieux visibles à la figure 2 et qui sont aussi orientés verticalement. Les extrémités de ces derniers barreaux 6 s'appuient respectivement sur un absorbeur supérieur 7 et un absorbeur inférieur 8 se présentant sous forme de bandes allongées transversales s'étendant sur toute la largeur de l'automobile, sans que ce soit nécessaire : des absorbeurs individuels pour chaque barreau 6 conviendraient aussi. Les absorbeurs 7 et 8 prennent appui sur des traverses 9 et 10 placées derrière eux, et appartenant au cadre du véhicule et assemblés aux longerons non représentés. Lors d'un choc à l'avant du véhicule, les barreaux 6 concernés sont repoussés vers l'arrière, de même que les absorbeurs 7 et 8 qui sont écrasés entre les barreaux 6 et les traverses 9 et 10. Les absorbeurs 7 et 8 sont en matière adaptée, alvéolaire ou peu rigide ; les structures en nid d'abeille ou des mousses peuvent être proposées ; des matières plastiques (polymères) seront généralement préférées. Les barreaux 6 seront conçus pour rester rigides pendant les chocs et pourront être en métal, mais aussi en matière plastique, éventuellement la même que celle des absorbeurs 7 et 8. Une construction unitaire sera parfois possible, surtout si l'identité des matières existe pour les barreaux 6 et les absorbeurs 7 et 8 ; sinon même, il sera possible, après avoir fabriqué les barreaux 6, de les unir aux absorbeurs 7 et 8, par exemple en fabriquant ceux-ci par moulage après avoir placé les extrémités des barreaux dans les cavités des moules. Une conception des barreaux 6 et des absorbeurs 7 et 8 en pièces séparées est aussi possible : les barreaux 6 pourront être assemblés à la carrosserie par des agrafes, des bouterolles ou d'autres éléments, et les absorbeurs 7 et 8 pourront être fixés aux traverses 9 et 10 par tout moyen approprié.

L'entre-deux des absorbeurs 7 et 8, qui n'est obstrué que par les barreaux 5 et 6, laisse une entrée d'air 11 importante sous forme d'un canal qui peut effectivement être exploitée pour refroidir le moteur. Dans les conceptions plus traditionnelles, l'entrée d'air principale est située plus bas dans la carrosserie. Cela est désavantageux car le radiateur 12, par lequel le moteur (non représenté) est refroidi, s'étend souvent à une certaine hauteur, de sorte que l'air admis l'atteint moins que par l'entrée 11 plus élevée. L'entrée d'air 11 à travers les barreaux 6 est donc l'entrée d'air principale de refroidissement du moteur, dans certaines réalisations de l'invention au moins.

Une autre conception est représentée à la figure 3 pour un véhicule dont la carrosserie s'étendrait plus bas. Il serait possible de prolonger les barreaux, portant ici la référence 16, jusqu'à un troisième absorbeur ou absorbeur de fond 17 similaire aux précédents et qui s'appuierait de même sur une troisième traverse 18. Les remarques précédentes resteraient valables.

## Revendications

1. Bouclier avant d'automobile comportant une structure d'absorption de chocs comprenant une rangée transversale de barreaux verticaux (6, 16), et au moins deux éléments absorbeurs (7, 8) placés derrière chaque barreau à des hauteurs différentes, **caractérisé en ce qu'**il comprend une entrée principale (11) d'air de refroidissement du moteur entre les deux hauteurs d'éléments absorbeurs et une grille (3) à barreaux verticaux (5) couvrant les barreaux (6) de la structure d'absorption de chocs.

2. Bouclier avant d'automobile selon la revendication 1, **caractérisé en ce que** la structure d'absorption comprend un troisième élément absorbeur (17) placé derrière chaque barreau, et **en ce que** l'entrée d'air principale est disposée entre les deux hauteurs les plus élevées des éléments absorbeurs.

3. Bouclier avant d'automobile selon la revendication 1 ou 2, **caractérisée en ce que** les éléments absorbeurs sont des bandes allongées transversalement derrière chacun des barreaux.

4. Bouclier avant d'automobile selon l'une quelconque des revendications précédentes, **caractérisé en ce que** les éléments absorbeurs sont adossés à des traverses (9, 10, 18) de cadre de l'automobile.

## Patentansprüche

1. Vorderer Kraftfahrzeug-Stoßfänger, der eine Stoßabsorptionsstruktur aufweist, die eine Querreihe von senkrechten Stäben (6, 16) und mindestens zwei Absorptionselemente (7, 8) enthält, die hinter jedem Stab auf verschiedenen Höhen angeordnet sind, **dadurch gekennzeichnet, dass** er einen Haupteingang (11) für Kühlluft des Motors zwischen den zwei Höhen von Absorptionselementen und ein Gitter (3) mit senkrechten Stäben (5) enthält, die die Stäbe (6) der Stoßabsorptionsstruktur bedecken.

2. Vorderer Kraftfahrzeug-Stoßfänger nach Anspruch 1, **dadurch gekennzeichnet, dass** die Absorptionsstruktur ein drittes Absorptionselement (17) enthält, das hinter jedem Stab angeordnet ist, und dass der Hauptlufteingang zwischen den zwei höchsten Höhen der Absorptionselemente angeordnet ist.

3. Vorderer Kraftfahrzeug-Stoßfänger nach Anspruch 1 oder 2, **dadurch gekennzeichnet, dass** die Absorptionselemente hinter jedem der Stäbe in Querrichtung liegende Streifen sind.

4. Vorderer Kraftfahrzeug-Stoßfänger nach einem der vorhergehenden Ansprüche, **dadurch gekennzeichnet, dass** die Absorptionselemente an Rahmenquerträger (9, 10, 18) des Kraftfahrzeugs angelehnt sind.

## Claims

1. Automobile front bumper having a shock absorption structure comprising a transverse row of vertical bars (6, 16), and at least two absorbing elements (7, 8) placed at different heights behind each bar, **characterized in that** it comprises a main air inlet (11) for engine cooling between the two heights of absorbing elements and a grille (3) with vertical bars (5) covering the bars (6) of the shock absorption structure.

2. Automobile front bumper according to Claim 1, **characterized in that** the absorption structure comprises a third absorbing element (17) placed behind each bar, and **in that** the main air inlet is arranged between the two highest heights of the absorbing elements.

3. Automobile front bumper according to Claim 1 or 2, **characterized in that** the absorbing elements are transversally elongated bands behind each of the bars.

4. Automobile front bumper according to any one of the preceding claims, **characterized in that** the absorbing elements are backed up against crossmembers (9, 10, 18) of the automobile frame.
